# EUROPÄISCHE PATENTANMELDUNG

(11) **EP 2 695 980 A1**
(43) Veröffentlichungstag der Anmeldung: **12.02.2014**
(21) Anmeldenummer: 13170105.4
(22) Anmeldetag: 31.05.2013
(51) Int. Cl.: D04H 1/00, B29C 70/30, D04H 1/732, D04H 1/736, D04H 1/74, D01G 15/00

(54) **Zuführvorrichtung für Fasern oder Faserflocken**

(30) Priorität: 06.08.2012 EP 12179382; 28.12.2012 EP 12199616; 28.12.2012 EP 12199625; 28.12.2012 EP 12199629
(71) Anmelder: Oskar Dilo Maschinenfabrik KG, 69412 Eberbach (DE)
(72) Erfinder: Dilo, Johann Philipp, 69412 Eberbach (DE)
(74) Vertreter: Wächter, Jochen

(57) **Zusammenfassung**

Die Zuführvorrichtung (2) zum Abstreuen von aufgelösten Fasern oder Faserflocken umfasst einen Abstreuabschnitt (20), in dem eine angetriebene Einzugswalze (22) und eine mit der Einzugswalze (22) zusammenwirkende angetriebene Öffnerwalze (24) angeordnet sind, wobei der Einzugswalze (22) eine Spendevorrichtung (16) zur Lagerung und Abgabe einer Faserlunte (18) oder eines Faservliesstreifens zugeordnet ist derart, dass die Einzugswalze (22) die von der Spendevorrichtung (16) bereitgestellte Faserlunte (18) oder den Faservliesstreifen abzieht und somit die Einzugswalze (22) mit der Faserlunte (18) oder dem Faservliesstreifen gespeist wird. Die Öffnerwalze (24) ist dabei derart angrenzend an die Einzugswalze (22) angeordnet, dass sie die von der Einzugswalze (22) eingezogene Faserlunte (18) oder den Faservliesstreifen in Fasern oder Faserflocken auflöst und diese abstreut.

## Beschreibung

Die vorliegende Erfindung betrifft eine Zuführvorrichtung für Fasern oder Faserflocken.

Ein bevorzugtes Anwendungsgebiet derartiger Zuführvorrichtungen liegt in der Herstellung von dreidimensional ausgeprägten Formteilen aus Fasermaterial. Dreidimensional ausgeprägte Formteile aus Fasermaterial werden beispielsweise in der Automobilindustrie eingesetzt und dienen dort zur Schalldämmung. Sie finden beispielsweise Verwendung als Türverkleidungen, Hutablagen und als Fahrzeughimmel. Ebenso werden der Boden und die Verbindungswände vom Fahrgastraum zu Kofferraum wie auch vom Fahrgastraum zum Motorraum mit schalldämmenden Formteilen ausgekleidet. Dabei sollen möglichst großflächige einstückige Teile eingesetzt werden. Die Karosseriebleche im Fahrzeug sind unter Steifigkeitsgesichtspunkten und unter dem Gesichtspunkt der Materialeinsparung stark und unregelmäßig verformt. Sie weisen Aufnahmen für zusätzliche Komponenten des Fahrzeugs und Durchführungen auf, zum Beispiel für Kabelkanäle und Lenksäule. Die verwendeten Formteile zur Schalldämmung müssen sich an diese stark dreidimensional ausgeformten Karosserieteile anpassen.

Dreidimensional ausgeprägte Formteile zur Schalldämmung, so genannte Akustikteile, mit ungleicher Dicke können zur Zeit aus PU-Schaum gefertigt werden. Dieser ist jedoch relativ teuer, da er auf Rohölbasis hergestellt wird. Zudem ist der PU-Schaum auch schwer recycelbar. Beim Brand emittiert er giftige Dämpfe.

Formteile aus herkömmlichen Fasermatten, die durch Walzen von Fasermaterialien produziert werden, sind nur sehr bedingt geeignet. Fasermatten können nämlich nur für schwach verformte Teile verwendet werden. Bei stärkerer Verformung reißen die Matten. Auch weisen sie aufgrund des Walzverfahrens keine gleichmäßige Dichteverteilung auf. Dadurch entsprechen sie häufig nicht den geometrischen und akustischen Anforderungen, die an solche speziellen Formteile gestellt werden.

Im Stand der Technik sind ferner dreidimensional geformte Vliesteile bekannt, die aus einem Fasergemisch oder aus Fasern und einem zugesetzten Bindemittel bestehen. Diese Vliesteile werden mittels Hot-Moulding-Prozess hergestellt. Ein Fasergemisch rieselt von oben in eine Unterform, so dass die Fasern in der Unterform angehäuft werden. Nach Befüllung der Unterform wird eine Oberform auf die Unterform aufgesetzt, so dass die locker aufgeschichteten Fasern verpresst werden. Anschließend wird die aus Unterform und Oberform bestehende Form mit heißer Luft durchströmt, so dass die Fasern miteinander verschmelzen und ein Formteil entsteht. Die Innenseite der Unterform bestimmt dabei die Kontur der Unterseite des Formteils, und die Innenseite der Oberform bestimmt die Kontur der Oberseite des Formteils.

Dreidimensional ausgeprägte Formteile können auch Strukturteile sein, die Kraft leitend sein können und tragende Funktion haben können.

DE 23 18 501 A offenbart eine Vorrichtung zur Herstellung von Formteilen aus Fasern. Zerhäckselte Fasern werden gegen die innere Oberfläche einer horizontal rotierenden siebartigen Form aufgebracht. Die Zuführung geschieht über eine Röhre, die horizontal beweglich ist. Die in der Form angelagerten Fasern werden durch ein äußeres Vakuum, das die äußere Oberfläche der Form umgibt, gegen die Form gepresst. Anschließend werden die Fasern mit einem Kunstharz-Bindemittelspray überzogen, das bei Wärme aushärtet. Die mit Fasern gefüllte Form kann mit Heißluft durchzogen werden, so dass das Formteil gehärtet wird.

US 5 942 175 A offenbart ein Verfahren und eine Vorrichtung zum Formpressen von losen Faseragglomeraten. Zum Füllen der Form werden entweder von oben mittels eines Schlauchs lose Faseragglomerate in der Form derart verteilt, dass auch Bereiche unterschiedlicher Dichte geschaffen werden können. In einer alternativen Ausführungsform werden die Fasern in eine geschlossene Form durch einen Luftstrom eingeblasen, wobei durch unterschiedliche Strömungsgeschwindigkeiten der einzelnen Lufteinlässe unterschiedliche Fülldichten innerhalb der Form realisiert werden sollen. Nach Einfüllen der Faseragglomerate wird eine Presse abgesenkt, so dass die Faseragglomerate innerhalb der Form zusammengedrückt werden. Durch Zuführen von heißer Luft werden die Faseragglomerate dann miteinander verklebt, so dass ein Formkörper entsteht.

Zuführvorrichtung für Fasern oder Faserflocken werden aber auch in anderen Anwendungsbereichen der Herstellung von Fasermaterialien verwendet, beispielsweise bei der Herstellung von Faserflockenmatten oder Faservliesen. Hierbei wird in der Regel versucht, die Faserflockenmatte oder das Faservlies über ihre gesamte Breite möglichst gleichmäßig zu gestalten. Auch hier kann aber eine räumliche Profilierung der Faserflockenmatte oder des Faservlieses gewünscht sein.

Ein Beispiel für eine solche Zuführvorrichtung für Fasern ist aus DE 195 41 818 A1 bekannt. Dabei werden Fasern mittels eines Bodenbandes zu einer Streueinrichtung bewegt, von der Fasern auf ein Transportband abgestreut werden. Eine Höhenmessung des derart erzeugten Vlieses beeinflusst in einem Regelkreis die Geschwindigkeit des Bodenbandes und somit die Menge der abgestreuten Fasern. Allerdings dient die Abstreueinheit der gleichzeitigen Abstreuung von Fasern über die gesamte Breite des zu erzeugenden Vlieses, sodass eine auch in Breitenrichtung des Vlieses lokal definierte, feinere Vergleichmä-βigung des Vlieses nicht erfolgen kann.

Nachteilig an all diesen oben genannten Vorrichtungen und Verfahren ist, dass eine partielle Faserbeflockung nicht exakt erfolgen kann und somit insbesondere eine lokal fein definierte Abstreuung des Fasermaterials nicht möglich ist. Dadurch kann das Flächengewicht des resultierendes Endprodukts lokal nur unzureichend erhöht, erniedrigt oder vergleichmäßigt werden.

Der vorliegenden Erfindung liegt die Aufgabe zugrunde, eine Zuführvorrichtung für Fasern oder Faserflocken zu schaffen, mit der auf einfache und effiziente Weise dreidimensional ausgebildete Produkte aus Fasermaterial hergestellt werden können, deren Flächenmassenprofil besonders exakt und reproduzierbar eingestellt werden kann.

Diese Aufgabe wird durch die Merkmale des Anspruchs 1 gelöst.

Erfindungsgemäß umfasst die Zuführvorrichtung zum Abstreuen von aufgelösten Fasern oder Faserflocken einen Abstreuabschnitt, in dem eine angetriebene Einzugswalze und eine mit der Einzugswalze zusammenwirkende angetriebene Öffnerwalze angeordnet sind, wobei der Einzugswalze eine Spendevorrichtung zur Lagerung und Abgabe einer Faserlunte oder eines Faservliesstreifens zugeordnet ist derart, dass die Einzugswalze die von der Spendevorrichtung bereitgestellte Faserlunte oder den Faservliesstreifen abzieht und somit die Einzugswalze mit der Faserlunte oder dem Faservliesstreifen gespeist wird. Die Öffnerwalze ist dabei derart angrenzend an die Einzugswalze angeordnet, dass sie die von der Einzugswalze eingezogene Faserlunte oder den Faservliesstreifen in Fasern oder Faserflocken auflöst und diese abstreut.

Mit dieser Zuführvorrichtung kann eine fein justierte, hochgenaue Abstreuung von Fasern oder Faserflocken erfolgen, mit der eine exakte Profilierung bzw. Vergleichmäßigung des erzielten Faserprodukts ermöglicht wird.

Bevorzugt ist der Abstreuabschnitt an einem Ende eines Zuführarms angeordnet. Wenn der Zuführarm ein-, zwei- oder dreidimensional beweglich ist, können die Anwendungsbereiche und die Flexibilität der Zuführvorrichtung weiter erhöht werden. In einer zweidimensional bewegbaren Ausgestaltung kann beispielsweise ein beliebiges Profil an Fasern gezielt auf eine Form abgestreut werden, ohne dass sich die Form selbst bewegen muss.

In einer bevorzugten Ausführungsform ist der Zuführarm ein Schwenkarm mit zwei Schenkeln, die an einer ersten Schwenkachse gelenkig miteinander verbunden sind, wobei der Abstreuabschnitt am Ende des zweiten Schenkels angeordnet ist. So wird auf einfache Weise eine eindimensionale Beweglichkeit der Zuführvorrichtung sichergestellt.

Vorzugsweise ist der erste Schenkel an seinem nicht mit dem zweiten Schenkel verbundenen Ende um eine zweite Schwenkachse drehbeweglich gelagert, wodurch die Beweglichkeit der Zuführvorrichtung in die zweite Dimension gewährleistet wird.

Die Faserlunte oder der Faservliesstreifen wird besonders gut zum Abstreuabschnitt geführt, wenn der Zuführarm im Bereich seiner ersten Schwenkachse eine Umlenkwalze zum Führen der Faserlunte oder des Faservliesstreifens zwischen Spendevorrichtung und Einzugswalze aufweist.

In einer ersten Ausgestaltung kann die Einzugswalze eine Garnitur mit bezüglich einer Drehrichtung der Einzugswalze rückwärts abragenden Zähnen aufweisen, wobei die Öffnerwalze in derselben Drehrichtung wie die Einzugswalze angetrieben ist und eine Garnitur mit bezüglich dieser Drehrichtung vorwärts abragenden Zähnen aufweist.

Alternativ kann die Einzugswalze eine Garnitur mit bezüglich einer Drehrichtung der Einzugswalze rückwärts abragenden Zähnen aufweisen, wobei die Öffnerwalze in einer zweiten Drehrichtung angetrieben ist, die der Drehrichtung der Einzugswalze entgegengesetzt ist, und eine Garnitur mit bezüglich der zweiten Drehrichtung vorwärts abragenden Zähnen aufweist.

Die Einzugswalze weist üblicherweise eine Breite von zwischen 5 und 50 mm, vorzugsweise zwischen 15 und 30 mm, mehr bevorzugt zwischen 20 und 25 mm, auf.

Ein Gebläse kann im Bereich des Abstreuabschnitts angeordnet sein, wodurch ein Luftstrom erzeugt wird, der die von der Öffnerwalze geöffneten Fasern in Richtung der Form bläst. Dies kann durch eine Untersaugung der Form unterstützt werden.

Außerdem kann die Zuführvorrichtung eine Heizwendel oder einen Gasbrenner im Bereich des Abstreuabschnitts aufweisen, sodass der Luftstrom gleichzeitig erhitzt wird. Dies kann in bestimmten Anwendungsbeispielen von Vorteil sein, bei denen das Faserzwischenprodukt einer Hitzebehandlung unterzogen wird. Ein Beispiel ist die Behandlung eines Gemisches aus Fasern und Schmelzklebstoff, wobei letzterer durch den heißen Luftstrom geschmolzen wird.

Die Zuführvorrichtung weist außerdem vorzugsweise eine Regelungseinrichtung zur Veränderung der Geschwindigkeit der Einzugswalze in Abhängigkeit von einer Streuposition des Abstreuabschnitts auf. Eine Programmierung der Regelungseinrichtung definiert hierbei im Vorfeld genau die Abstreugeschwindigkeiten und somit Abstreumengen sowie das jeweilige Bewegungsmuster des Abstreuabschnitts. Bevorzugt ist die Einzugswalze mit einem Servomotor angetrieben, was eine exakte Dosierung der von der Zuführvorrichtung abgestreuten Fasern ermöglicht.

In einer effektiven Ausführungsform weist die Zuführvorrichtung zwei einzeln ansteuerbare Einzugswalzen auf, die nebeneinander und parallel zueinander angeordnet sind.

Eine Vliesbildungsanlage umfasst eine Zuführvorrichtung wie oben beschrieben sowie eine zweidimensionale Ablagefläche oder eine dreidimensionale Form zum Aufnehmen der von der Zuführvorrichtung abgestreuten Fasern oder Faserflocken.

Vorzugsweise ist dabei die zweidimensionale Ablagefläche oder die dreidimensionale Form luftdurchlässig, und es ist eine Untersaugungsvorrichtung zum Untersaugen der Ablagefläche oder der Form vorgesehen.

Weitere Merkmale und Vorteile der vorliegenden Erfindung ergeben sich aus der nachfolgenden Beschreibung unter Bezugnahme auf die Zeichnungen.
- Fig. 1: ist eine schematische Perspektivansicht einer Ausführungsform der erfindungsgemäßen Zuführvorrichtung;
- Fig. 2: ist eine schematische Perspektivansicht einer weiteren Ausführungsform der erfindungsgemäßen Zuführvorrichtung;
- Fig. 3: ist eine schematische Perspektivansicht einer weiteren Ausführungsform der erfindungsgemäßen Zuführvorrichtung;
- Fig. 4: ist eine schematische Perspektivansicht einer weiteren Ausführungsform der erfindungsgemäßen Zuführvorrichtung;
- Fig. 5: ist eine schematische Perspektivansicht einer weiteren Ausführungsform der erfindungsgemäßen Zuführvorrichtung;
- Fig. 6: ist eine schematische Perspektivansicht einer weiteren Ausführungsform der erfindungsgemäßen Zuführvorrichtung; und
- Fig. 7: ist eine schematische Perspektivansicht einer weiteren Ausführungsform der erfindungsgemäßen Zuführvorrichtung.

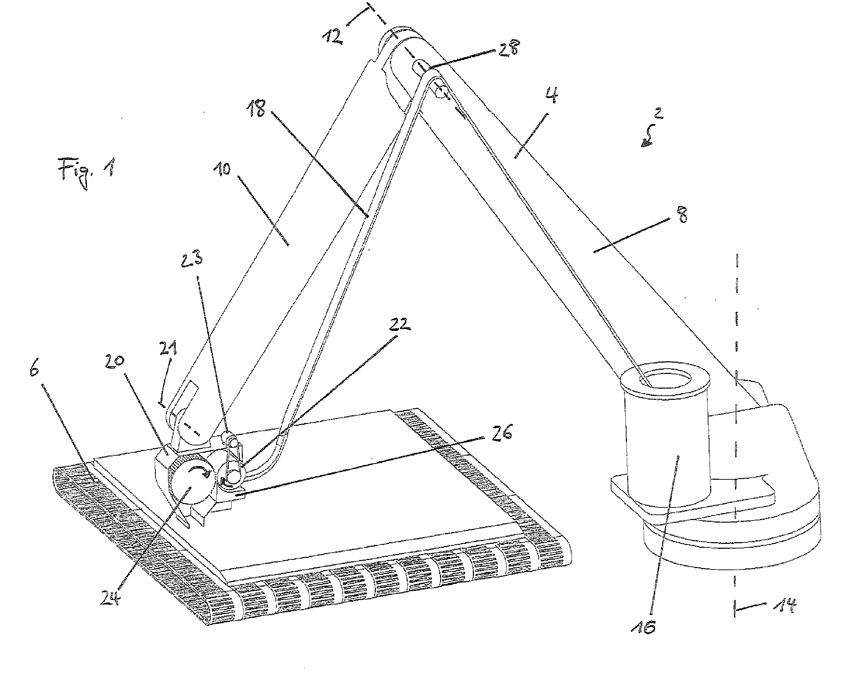

Fig. 1 zeigt eine erste Ausführungsform der erfindungsgemäßen Zuführvorrichtung. Die Zuführvorrichtung 2 weist im dargestellten Beispielsfall einen Zuführarm 4 auf. Es sind aber auch andere Ausgestaltungen der Zuführvorrichtung 2 denkbar.

Der Zuführarm 4 ist im Beispiel der Fig. 1 über einer zweidimensionalen Ablagefläche 6, hier dem oberen Trum eines umlaufenden Transportbandes, angeordnet. Der Zuführarm 4 ist hier ein Schwenkarm mit zwei Schenkeln 8, 10, die in Form eines umgekehrten V gelenkig miteinander an einer ersten, vorzugsweise horizontalen, Schwenkachse 12 im Kreuzungsbereich der Schenkel 8, 10 verbunden sind. Somit ist der zweite Schenkel 10 über die erste Schwenkachse 12 schwenkbar mit dem ersten Schenkel 8 verbunden, und zwar derart, dass das umgekehrte V durch Schwenken des zweiten Schenkels 10 einen größeren oder kleineren Zwischenwinkel zwischen den beiden Schenkeln 8, 10 einschließt.

Der erste Schenkel 8 ist zudem an seinem nicht mit dem zweiten Schenkel 10 verbundenen Ende um eine zweite, vorzugsweise vertikale, Schwenkachse 14 drehbeweglich gelagert, vorzugsweise auf einem Sockel oder in einem Maschinengestell. Durch Drehung des Schwenkarms um die zweite Schwenkachse 14 wird dem Zuführarm 4 eine zweite Dimension seiner Bewegung ermöglicht. Die erste Schwenkachse 12 und die zweite Schwenkachse 14 verlaufen dabei in senkrecht zueinander stehenden Richtungen.

Von der Zuführvorrichtung 2 werden Fasern oder Faserflocken auf die zweidimensionale Ablagefläche 6 örtlich gezielt abgestreut. Die Zuführvorrichtung 2 weist dabei eine vorzugsweise stationäre Spendevorrichtung 16 zur Lagerung und Abgabe einer Faserlunte oder eines Faservliesstreifens auf. Im vorliegenden Beispielsfall ist die Spendevorrichtung 16 gemeinsam mit dem Zuführarm 4 um die zweite Schwenkachse 14 schwenkbar und in einem hinteren Endbereich des ersten Schenkels 8 des Zuführarms 4 lösbar befestigt. Hierzu ist in der dargestellten Ausführungsform am hinteren Ende des ersten Schenkels 8 des Zuführarms 4 eine Auflagefläche 20 für die Spendevorrichtung 16 vorgesehen. Im vorliegenden Beispielsfall ist die Spendevorrichtung 16 als Spinnkanne ausgebildet, es kommen aber auch alle möglichen anderen Spendevorrichtungen 16 wie Spulen in Frage. Außerdem kann die Spendevorrichtung 16 auf andere Art und Weise gelagert sein als in den dargestellten Ausführungsbeispielen.

Am vorderen Ende des zweiten Schenkels 10 weist die Zuführvorrichtung 2 einen Abstreuabschnitt 20 auf, der über eine weitere horizontal angeordnete Schwenkachse 21 mit dem Rest des zweiten Schenkels 10 verbunden sein kann. Im Abstreuabschnitt 20 sind eine angetriebene Einzugswalze 22 und eine mit der Einzugswalze 22 zusammenwirkende angetriebene Öffnerwalze 24 angeordnet. Die Einzugswalze 22 zieht dabei die von der Spendevorrichtung 16 bereitgestellte Faserlunte 18 oder den Faservliesstreifen ab. Mit anderen Worten wird die Einzugswalze 22 mit der Faserlunte 18 oder dem Faservliesstreifen gespeist. Der Einzug der Faserlunte 18 bzw. des Faservliesstreifens durch die Einzugswalze 22 erfolgt vorzugsweise über eine Mulde 26. Die Faserlunte 18 bzw. der Faservliesstreifen verläuft dabei vorzugsweise entlang der Schenkel 8, 10 des Zuführarms 4, wobei im Bereich der ersten Schwenkachse 12 eine Umlenkwalze 28 zum Führen der Faserlunte 18 oder des Faservliesstreifens zwischen der Spendevorrichtung 16 und der Einzugswalze 22 vorliegen kann. Die Umlenkwalze 28 kann starr ausgebildet sein, sie kann aber auch drehbar gelagert sein.

Die Öffnerwalze 24 ist derart angrenzend an die Einzugswalze 22 angeordnet, dass sie die von der Einzugswalze 22 eingezogene Faserlunte 18 oder den Faservliesstreifen in Fasern oder Faserflocken auflöst bzw. Fasern herausreißt und diese abstreut. Vorzugsweise sind beide Drehachsen sowohl der Einzugswalze 22 als auch der Öffnerwalze 24 im Wesentlichen horizontal und parallel zueinander ausgerichtet. Die Öffnerwalze 24 wird in der Regel einen etwas größeren Durchmesser als die Einzugswalze 22 aufweisen. Im dargestellten Beispielsfall der Fig. 1 wird die Einzugswalze 22 eine Garnitur (nicht dargestellt) mit bezüglich einer Drehrichtung der Einzugswalze rückwärts abragenden Zähnen aufweisen, während die Öffnerwalze 24 in einer zweiten Drehrichtung angetrieben ist, die der Drehrichtung der Einzugswalze 22 entgegengesetzt ist, und eine Garnitur mit bezüglich der zweiten Drehrichtung vorwärts abragenden Zähnen aufweist. Auf diese Weise streift die Öffnerwalze 24 mit den Zähnen ihrer Garnitur Fasern oder Faserflocken aus der von der Einzugswalze 22 herantransportierten Faserlunte 18 oder dem Faservliesstreifen ab, woraufhin diese aufgrund ihrer Schwerkraft im Bereich zwischen Einzugswalze 22 und Öffnerwalze 24 nach unter auf die Ablagefläche 6 fallen. Während die Öffnerwalze 24 kontinuierlich angetrieben sein kann, ist es vorteilhaft, wenn die Einzugswalze 22 mit einem Servomotor 23 angetrieben ist. Auf diese Weise kann die Menge der abgestreuten Fasern exakt dosiert werden. Die Breite der Einzugswalze 22 entspricht vorzugsweise in etwa der Breite der eingezogenen Faserlunte 18 oder des Faservliesstreifens, kann aber auch etwas breiter sein. Für die Breite der Öffnerwalze 24 gilt im Wesentlichen dasselbe. Somit weist die Einzugswalze 22 vorzugsweise eine Breite von zwischen 5 und 50 mm, mehr bevorzugt zwischen 15 und 30 mm, noch mehr bevorzugt zwischen 20 und 25 mm auf.

Die in Fig. 1 dargestellte Ausführungsform der Zuführvorrichtung 2 kann zusammen mit der Ablagefläche 6, hier dem umlaufenden Transportband, als Vliesbildungsanlage arbeiten. Ebenso ist es aber möglich, dass ein bereits gebildetes Vlies bzw. eine Faserflockenmatte mit Hilfe der Zuführvorrichtung 2 nur an bestimmten Stellen vergleichmäßigt wird. Ebenso ist die Bildung eines gewünschten Querprofils und/oder Längsprofils durch zusätzliche Abstreuung von Fasern mittels der Zuführvorrichtung 2 auf einem bereits zuvor gebildeten Vlies oder einer Faserflockenmatte denkbar. In den beiden letztgenannten Anwendungsfällen können der Zuführvorrichtung 2 entsprechende Gewichtssensoren (nicht dargestellt) vorgeschaltet sein, die das Flächengewicht der zuvor erzeugten Faserflockenmatte bzw. des Vlieses messen und auf Basis von deren Messergebnissen die Zuführvorrichtung 2 gesteuert wird.

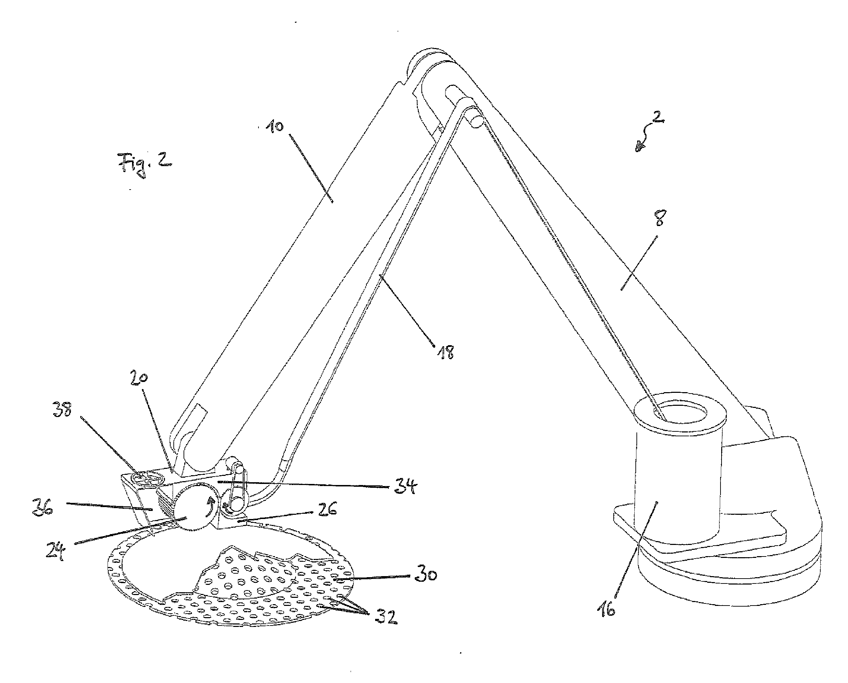

In Fig. 2 erfolgt die Abstreuung der Fasern nicht auf eine ebene Ablagefläche, sondern auf eine dreidimensionale Form 30. Zuführvorrichtung 2 und Form 30 bilden zusammen eine Vliesbildungsanlage. Die Form 30 kann eine beliebige dreidimensionale Gestalt aufweisen. Außerdem kann die Form 30 untersaugt sein, wie im dargestellten Beispielsfall durch die Durchtrittslöcher 32 angedeutet wird.

In Fig. 2 ist außerdem eine andere Ausgestaltung des Abstreuabschnitts 20 dargestellt. Ebenso wie in der Ausführungsform der Fig. 1 erfolgt der Einzug der Faserlunte 18 bzw. des Faservliesstreifens wieder über die Einzugswalze 22, wobei die Faserlunte 18 in einem unteren Bereich der Einzugswalze 22 eingezogen und dort entlang der Mulde 26 geführt wird. Auch die Drehrichtung und die Ausrichtung der Zähne der Einzugswalze 22 sind identisch zum vorangehenden Beispiel. Allerdings ist nunmehr die Öffnerwalze 24 in derselben Drehrichtung wie die Einzugswalze 22 angetrieben und weist eine Garnitur mit bezüglich dieser Drehrichtung vorwärts abragenden Zähnen auf. In der dargestellten Ausführungsform bedeutet dies, dass die durch die Öffnerwalze 24 abgerissenen Fasern oder Faserflocken nach oben in Richtung einer weiteren Mulde 34 und schließlich entlang dieser, in der Zeichnung gegen den Uhrzeigersinn, in einen Abgabeschacht 36 befördert werden.

In diesem Abgabeschacht 36 würden die abgelösten Fasern normalerweise wieder aufgrund ihrer Schwerkraft und der Drehgeschwindigkeit der Öffnerwalze 24 nach unten befördert und somit auf die Form 30 abgestreut. Wie in Fig. 2 dargestellt, kann aber auch zusätzlich ein Gebläse 38 im Bereich des Abstreuabschnitts 20 angeordnet sein, im dargestellten Beispielsfall im Bereich des Abgabeschachts 36. Der vom Gebläse 38 erzeugte Luftstrom bläst die abgelösten Fasern in Richtung der Form 30 nach unten. Dies kann durch die Untersaugung der Form 30 noch zusätzlich unterstützt werden.

Die in Fig. 2 dargestellte Vliesbildungsanlage, bestehend aus Zuführvorrichtung 2 und Form 30, wird in erster Linie bei der Herstellung von dreidimensionalen Formteilen verwendet, wie sie in der Beschreibungseinleitung dieses Dokuments erläutert sind. Nach dem Abstreuen der Fasern auf die Form 30 kann das in der Form 30 befindliche Fasermaterial beliebigen weiteren Bearbeitungsschritten unterzogen werden, die aus dem Stand der Technik bekannt sind, einschließlich Verpressen mit einer Oberform, Heizen etc.

Grundsätzlich wird die Zuführvorrichtung in den meisten Ausführungsformen eine Regelungseinrichtung (nicht dargestellt) zur Veränderung der Geschwindigkeit der Einzugswalze 22 in Abhängigkeit von einer Streuposition des Abstreuabschnitts 20 aufweisen. Hierbei kann entweder ein bereits zuvor festgelegtes Programm durchlaufen werden, oder die Regelungseinrichtung kann auch variabel auf Messergebnisse von Sensoren reagieren, wie oben unter Bezugnahme auf Fig. 1 bereits erwähnt wurde.

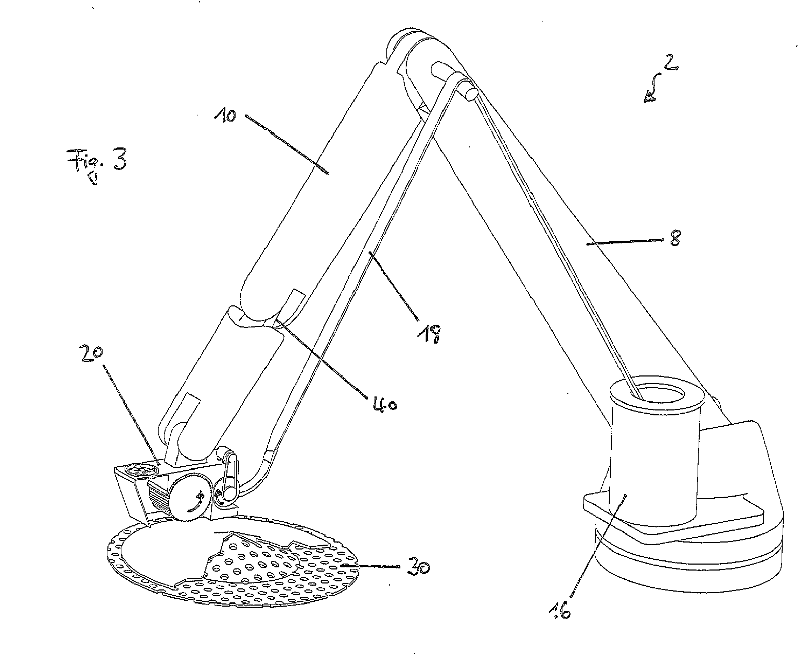

In der in Fig. 3 dargestellten Ausführungsform der Zuführvorrichtung 2 weist der zweite Schenkel 10 des Zuführarms 4 ein weiteres Drehgelenk 40 auf, sodass ein vorderer Abschnitt des zweiten Schenkels 10 um eine senkrecht zur Erstreckungsrichtung des zweiten Schenkels 10 verlaufende Schwenkachse geschwenkt werden kann. Ansonsten entspricht die in Fig. 3 dargestellte Ausführungsform der Zuführvorrichtung der Ausführungsform aus Fig. 2.

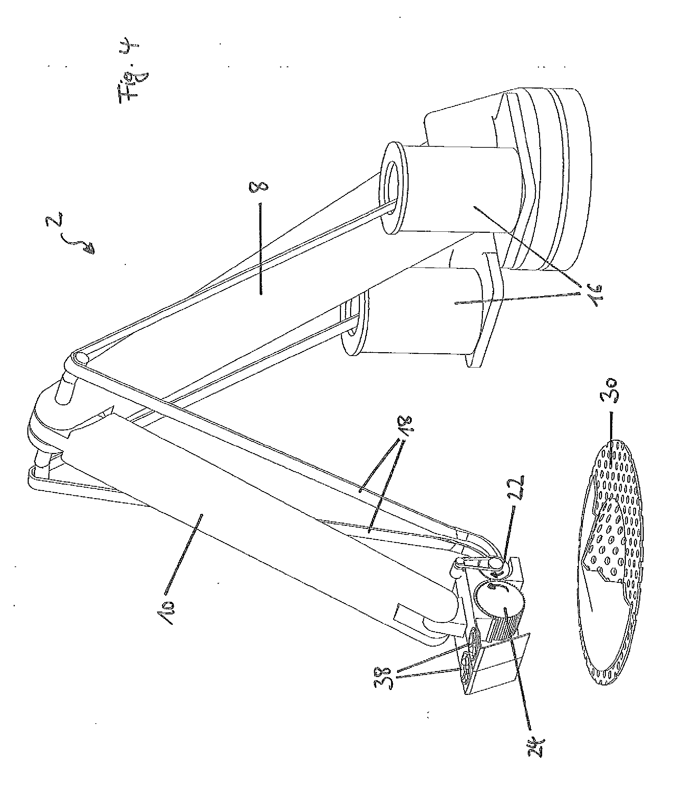

Bei der in Fig. 4 dargestellten Ausführungsform der Zuführvorrichtung 2 sind zwei Zuführlinien parallel zueinander auf beiden Seiten des Zuführarms 4 angeordnet. Jede Zuführlinie entspricht im Wesentlichen der Ausführungsform aus Fig. 2. Mit anderen Worten sind jeweils zwei Spendevorrichtungen 16 und zwei Einzugswalzen 22 vorgesehen. Jede Einzugswalze 22 ist dabei über einen eigenen Servomotor 23 angesteuert. Im dargestellten Beispielsfall ist lediglich eine Öffnerwalze 24 über die gesamte Breite des Abstreuabschnitts 20 angeordnet und dient somit der Auflösung von Fasern aus den von beiden Einzugswalzen 22 eingezogenen Faserlunten 18. Mit dieser Anordnung kann die Effektivität der Zuführvorrichtung 2 weiter erhöht werden.

Es ist auch denkbar, dass nur der erste Strang der Faserlunte 18 aus dem Basisfasermaterial gebildet ist, während der zweite Strang der Faserlunte 18 ein Strang aus Schmelzklebefasern ist. Außerdem ist es möglich, die beiden Faserlunten 18 derselben Einzugswalze 22 zuzuführen.

Schließlich ist es in allen gezeigten Ausführungsformen auch möglich, die Faserlunte 18 als Mischung aus verschiedenen Fasern zu gestalten, beispielsweise einem Basisfasermaterial und Schmelzklebefasern.

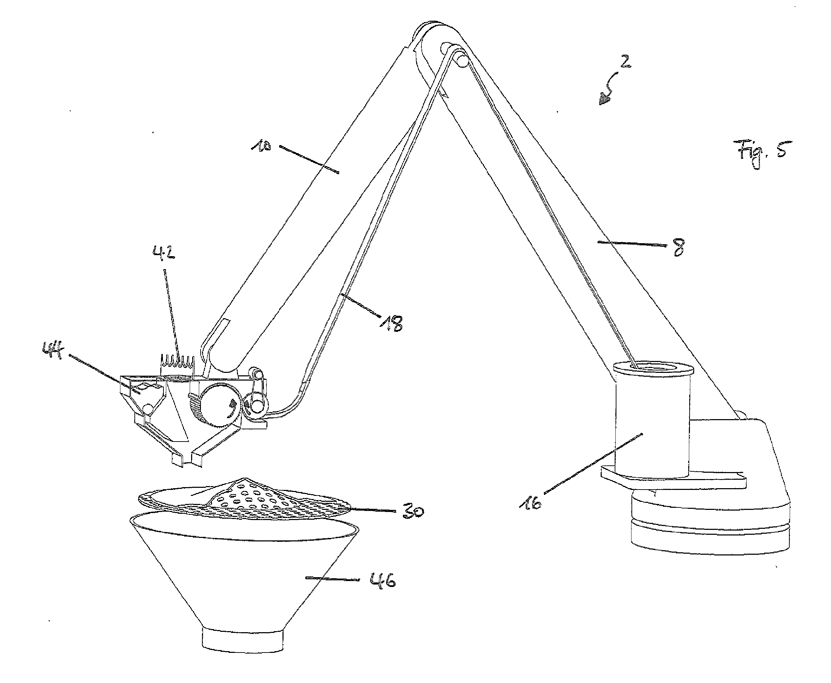

Die in Fig. 5 dargestellte Ausführungsform der Zuführvorrichtung 2 entspricht im Wesentlichen der Ausführungsform aus Fig. 3, wobei zusätzlich zu den dort dargestellten Elementen eine Heizwendel 42 im Bereich des Abgabeschachts 36 angeordnet ist. Anstelle der Heizwendel 42 kann auch ein Gasbrenner vorgesehen sein. Zudem kann, wie in Fig. 5 dargestellt, auch ein Vorratsbehälter 44 für Zugabematerialien im Bereich des Abstreuabschnitts 20 vorgesehen sein. Im Vorratsbehälter 44 kann beispielsweise ein Schmelzklebstoff in Granulatform gelagert sein, der mit den abgelösten Fasern zu einem Gemisch vermischt wird. Die Erhitzung des Schmelzklebstoffs kann dann durch den heißen Luftstrom in der Zuführvorrichtung 2 erfolgen. Ebenso ist es jedoch denkbar, den Schmelzklebstoff in diesem Bereich der Zuführvorrichtung 2 zuzugeben, aber erst später das Gemisch aus Fasern und Schmelzklebstoff in einem Ofen zu erhitzen. Auch die Zugabe anderer Materialien ist denkbar. In Fig. 5 ist außerdem die Untersaugungsvorrichtung 46 für die Form 30 dargestellt.

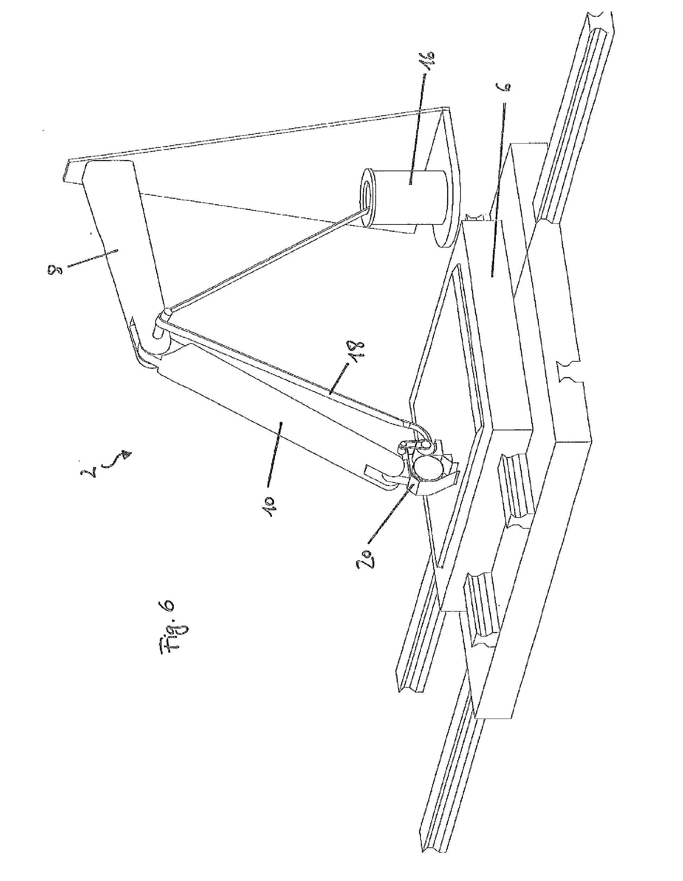

Fig. 6 zeigt eine weitere Ausführungsform einer Vliesbildungsanlage, bei der der Zuführarm 4 lediglich eindimensional bewegbar ist. Der erste Schenkel 8 des Zuführarms 4 ist dabei im Wesentlichen horizontal starr an einem Maschinengestell befestigt, während die übrigen Elemente unverändert bleiben. In diesem Fall ist es notwendig, dass die Ablagefläche 6 mindestens in eine Richtung beweglich ist, um eine zweidimensionale Aufstreuung von Fasern zu ermöglichen. Im dargestellten Beispielsfall ist die Ablagefläche 6 sogar in zwei Dimensionen verschieblich gelagert.

Es kann auch bei anderen Ausführungsformen der Zuführvorrichtung 2 hilfreich sein, wenn die Ablagefläche 6 bzw. die Form 30 beweglich gestaltet sind. Denkbar sind beispielsweise rotierende Bewegungen um eine vertikale Achse oder Translationsbewegungen in der Horizontalen.

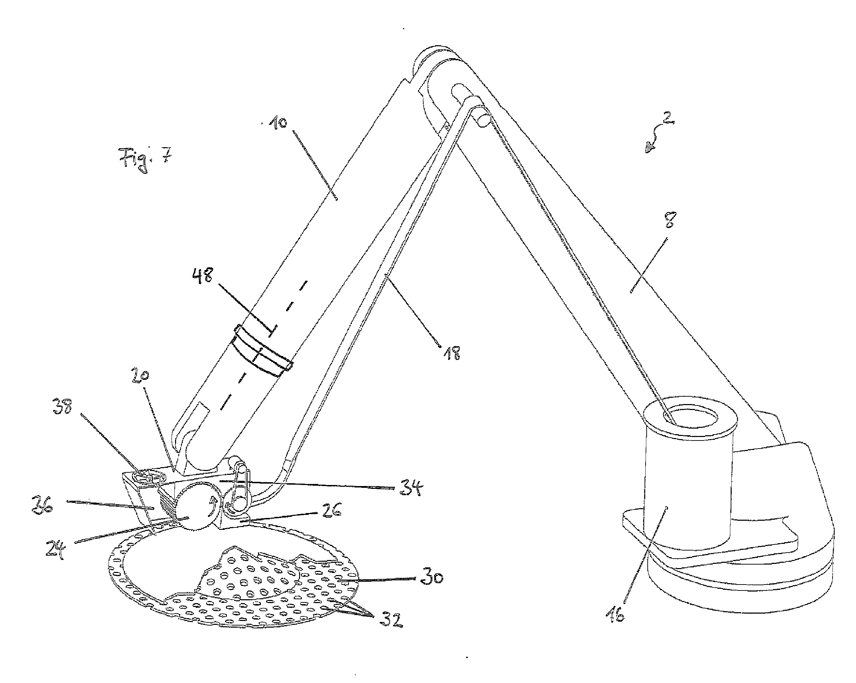

Die in Fig. 7 dargestellte Ausführungsform entspricht der Ausführungsform aus Fig. 2 und umfasst eine weitere Drehachse 48 parallel zur Erstreckungsrichtung des zweiten Schenkels 10. Somit ist ein weiterer Torsionsfreiheitsgrad für den Kopf des Abstreuabschnitts 20 gegeben, und der Kopf ist somit vollständig um die Drehachse 48 drehbar.

Alle unter Bezugnahme auf Fig. 1 bis 7 beschriebenen Details und Alternativen können jeweils mit Merkmalen der übrigen Ausführungsformen kombiniert werden. Dies gilt beispielsweise für die Ausgestaltung des Abstreuabschnitts 20, aber auch die Bewegungskonstruktion des Zuführarms 4.

Insbesondere die Anzahl und Anordnung der Schwenkachsen im Bereich des Zuführarms 4 ist beliebig einstellbar. Außerdem wäre es denkbar, eine weitere horizontale Schwenkachse im Bereich des hinteren Endes des ersten Schenkels 8 vorzusehen, sodass beim Schwenken des zweiten Schenkels 10 relativ zum ersten Schenkel 8 außerdem der erste Schenkel 8 verschwenkt werden kann, wodurch die Höhe des Abstreuabschnitts 20 über der Form 30 bzw. der Ablagefläche 6 konstant gehalten werden kann. Auch eine Linearbewegung des gesamten Zuführarms 4 ist denkbar.

Insgesamt sollte die Zuführvorrichtung 2 in ein, zwei oder drei Dimensionen bewegt werden können. Es ist aber auch möglich, dass die Zuführvorrichtung 2 stationär ist, wenn eine entsprechende Bewegung der Ablagefläche 6 bzw. der Form 30 gewährleistet ist. Wie zuvor bereits erwähnt, ist auch eine Kombination von bewegter Zuführvorrichtung 2 und bewegter Ablagefläche 6 bzw. Form 30 denkbar.

Die Zuführvorrichtung 2 kann zur eigenständigen Bildung von Formteilen aus Fasern, aber auch zur Bildung von Fasermatten oder Vliesen verwendet werden. Sie kann außerdem eingesetzt werden, um bereits bestehende Fasermatten oder Vliese zu vergleichmäßigen oder diesen ein vorbestimmtes Profil zu geben.

## Patentansprüche

1. Zuführvorrichtung (2) zum Abstreuen von aufgelösten Fasern oder Faserflocken mit:
einem Abstreuabschnitt (20), in dem eine angetriebene Einzugswalze (22) und eine mit der Einzugswalze (22) zusammenwirkende angetriebene Öffnerwalze (24) angeordnet sind,
wobei der Einzugswalze (22) eine Spendevorrichtung (16) zur Lagerung und Abgabe einer Faserlunte (18) oder eines Faservliesstreifens zugeordnet ist derart, dass die Einzugswalze (22) die von der Spendevorrichtung (16) bereitgestellte Faserlunte (18) oder den Faservliesstreifen abzieht und somit die Einzugswalze (22) mit der Faserlunte (18) oder dem Faservliesstreifen gespeist wird,
wobei die Öffnerwalze (24) derart angrenzend an die Einzugswalze (22) angeordnet ist, dass sie die von der Einzugswalze (22) eingezogene Faserlunte (18) oder den Faservliesstreifen in Fasern oder Faserflocken auflöst und diese abstreut.

2. Zuführvorrichtung (2) nach Anspruch 1, **dadurch gekennzeichnet, dass** der Abstreuabschnitt (20) an einem Ende eines Zuführarms (4) angeordnet ist.

3. Zuführvorrichtung (2) nach Anspruch 2, **dadurch gekennzeichnet, dass** der Zuführarm (4) ein-, zwei- oder dreidimensional beweglich ist.

4. Zuführvorrichtung (2) nach Anspruch 3, **dadurch gekennzeichnet, dass** der Zuführarm (4) ein Schwenkarm mit zwei Schenkeln (8, 10) ist, die an einer ersten Schwenkachse (12) gelenkig miteinander verbunden sind, wobei der Abstreuabschnitt (20) am vorderen Ende des zweiten Schenkels (10) angeordnet ist.

5. Zuführvorrichtung (2) nach Anspruch 4, **dadurch gekennzeichnet, dass** der erste Schenkel (8) an seinem nicht mit dem zweiten Schenkel (10) verbundenen hinteren Ende um eine zweite Schwenkachse (14) drehbeweglich gelagert ist.

6. Zuführvorrichtung (2) nach Anspruch 4 oder 5, **dadurch gekennzeichnet, dass** der Zuführarm (4) im Bereich seiner ersten Schwenkachse (12) eine Umlenkwalze (28) zum Führen der Faserlunte (18) oder des Faservliesstreifens zwischen Spendevorrichtung (16) und Einzugswalze (22) aufweist.

7. Zuführvorrichtung (2) nach einem der vorangehenden Ansprüchen, **dadurch gekennzeichnet, dass** die Einzugswalze (22) eine Garnitur mit bezüglich einer Drehrichtung der Einzugswalze rückwärts abragenden Zähnen aufweist, wobei die Öffnerwalze (24) in derselben Drehrichtung wie die Einzugswalze (22) angetrieben ist und eine Garnitur mit bezüglich dieser Drehrichtung vorwärts abragenden Zähnen aufweist.

8. Zuführvorrichtung (2) nach einem der Ansprüche 1 bis 6, **dadurch gekennzeichnet, dass** die Einzugswalze (22) eine Garnitur mit bezüglich einer Drehrichtung der Einzugswalze (22) rückwärts abragenden Zähnen aufweist, wobei die Öffnerwalze (24) in einer zweiten Drehrichtung angetrieben ist, die der Drehrichtung der Einzugswalze (22) entgegengesetzt ist, und eine Garnitur mit bezüglich der zweiten Drehrichtung vorwärts abragenden Zähnen aufweist.

9. Zuführvorrichtung (2) nach einem der vorangehenden Ansprüche, **dadurch gekennzeichnet, dass** die Einzugswalze (22) eine Breite von zwischen 5 und 50 mm, vorzugsweise zwischen 15 und 30 mm, mehr bevorzugt zwischen 20 und 25 mm, aufweist.

10. Zuführvorrichtung (2) nach einem der vorangehenden Ansprüche, **dadurch gekennzeichnet, dass** sie ein Gebläse (38) im Bereich des Abstreuabschnitts (20) aufweist.

11. Zuführvorrichtung (2) nach Anspruch 10, **dadurch gekennzeichnet, dass** sie außerdem eine Heizwendel (42) oder einen Gasbrenner im Bereich des Abstreuabschnitts (20) aufweist.

12. Zuführvorrichtung (2) nach einem der vorangehenden Ansprüche, **dadurch gekennzeichnet, dass** sie eine Regelungseinrichtung zur Veränderung der Geschwindigkeit der Einzugswalze (22) in Abhängigkeit von einer Streuposition des Abstreuabschnitts (20) aufweist.

13. Zuführvorrichtung (2) nach einem der vorangehenden Ansprüche, **dadurch gekennzeichnet, dass** sie zwei einzeln ansteuerbare Einzugswalzen (22) aufweist, die nebeneinander und parallel zueinander angeordnet sind.

14. Vliesbildungsanlage mit
einer Zuführvorrichtung (2) nach einem der vorangehenden Ansprüche, und
einer zweidimensionalen Ablagefläche (6) oder einer dreidimensionalen Form (30) zum Aufnehmen der von der Zuführvorrichtung (2) abgestreuten Fasern oder Faserflocken.

15. Vliesbildungsanlage nach Anspruch 14, **dadurch gekennzeichnet, dass** die zweidimensionale Ablagefläche (6) oder die dreidimensionale Form (30) luftdurchlässig ist und eine Untersaugungsvorrichtung (46) zum Untersaugen der Ablagefläche (6) oder der Form (30) vorgesehen ist.
